# EUROPEAN PATENT APPLICATION

(11) **EP 3 718 407 A1**
(43) Date of publication of application: **07.10.2020**
(21) Application number: 19166626.2
(22) Date of filing: 01.04.2019
(51) Int. Cl.: A22C 11/00, A47C 7/52, E06C 1/39, E06C 1/397

(54) **MANUFACTURING SYSTEM AND STEP FOR MANUFACTURING SYSTEM**

(71) Applicant: Poly-clip System GmbH & Co. KG, 65795 Hattersheim (DE)
(72) Inventor: Weidenhaus, Björn, 35440 Linden (DE)
(74) Representative: Eisenführ Speiser

(57) **Abstract**

The present invention relates to a manufacturing system (S), comprising a production machine (10) having a support frame (14), wherein the support frame (14) comprises at least one exposed portion (16), the manufacturing system (S) further comprising at least one step (30) for removable attachment to the exposed portion (16) of the support frame (14), the step (30) comprising at least one tread surface (32) and at least one coupling means (34) for removable attachment to the exposed portion (16), and to a step (30) for removable attachment to an exposed portion (16) of a support frame (14) of a production machine (10).

## Description

The present invention relates to a manufacturing system which comprises a production machine and a step for removable attachment to the production machine, and to a step for removable attachment to a production machine.

In practice, it is known that, for example in the production of sausage-shaped products, like sausages, filling material is fed by a filling machine through a filling tube of a clipping machine into a tubular or bag-shaped packaging casing which can be stored on said filling tube and which is closed at its front end by a closure clip as a closure means. The tubular or bag-shaped packaging casing is pulled-off from the filling tube while being filled by the feeding pressure. A casing brake assembly can be positioned in the region of the front end of the filling tube, in order to apply a frictional force to the tubular or bag-shaped packaging casing while being pulled-off from the filling tube.

After a predetermined volume of filling material has been filled into said tubular or bag-shaped packaging casing, a displacer arrangement or gathering means, respectively, gathers the filled tubular or bag-shaped packaging casing and shapes a plait-like portion thereto. A clipping device of the clipping machine then places and closes at least one closure clip at the plait-like portion forming the rear end of the sausage-shaped product. The clipping device comprises a first and second closure tool cooperating with each other for closing the at least one clip at the plait-like portion by reversibly moving at least one of the two closure tools towards the other or by reversibly moving both closure tools towards each other.

On these known clipping machines, the closure means are provided as a supply of closure clips, for example like a line of clips wound on a reel. The clip reel of these known machines is reversibly mounted to a horizontally oriented axis which is arranged above the top of the clipping machine via a support bar or the like. In a typical production environment, the clip reels are manually refilled by a human operator.

Because the operating speed of clipping machines, in particular clipping machines which provide a full automatic operation mode, can be relatively high, it is necessary to provide clip reels with a large number of clips stored thereon. The latter results in a large diameter of the clip reel which, in turn, makes it necessary to arrange the horizontally oriented axis with a great distance from the top of the clipping machine. Moreover, in practice, clipping machines are known which are able to place simultaneously two closure clips to the plait-like portion in order to close the rear end of the sausage-shaped product just filled and to close the front end of the subsequent sausage-shaped product to be filled during the next filling operation. Therefore, such clipping machines need two clip reels which must be mounted to the axis on both sides of the support bar. Since such clipping machines can have large dimensions, in particular a large height, and since the horizontally aligned axis for the rotatable reception of the clip reels is provided above the top of the clipping machine, the exchange of the clip reels is extremely cumbersome.

A manufacturing system which includes a clipping machine for sausage-shaped products, like sausages, is for example disclosed in EP patent application 3 241 447.

US patent application 2008/0000196 discloses a manufacturing system which comprises, inter alia, a clipping machine, which is suitable for packaging whole muscle or other products in a covering material, such as, for example netting, wherein the closure clips are stored on a top of the clipping machine. The manufacturing system further includes a product pusher assembly having a loading chute and a side table arranged on a top of the product pusher assembly. An operator can manually place pieces of product on the side table and then on the loading chute to load product.

Clip reels which require replacement and product which is to be loaded into a loading chute of a production machine, such as a clipping machine described above, may be heavy, and handling them above a certain height may place improper strain on the body of an operator, which could, for example, lead to injury. Furthermore, sections on top of or in any other hard-to-reach portion of a production machine may require regular maintenance and/or cleaning, or be accessed for other reasons during, after or prior to operation of the machine. It has to be understood that these challenges are not limited to machines for producing sausage-shaped products, or for packaging foodstuff or other products in a covering material, but are present in the operation of a wide variety of other production machines.

Other production machines, which have to be maintained or which need provision of consumables, may also have hard-to-reach portions: In particular, those machines might have portions which cannot be reached by an operator standing on the ground on which the machine is positioned or only with the aid of ladders.

It is therefore an object of the present invention to enable safe, fast, and convenient replacement of consumables of a production machine and/or enable safe, fast and convenient operation, maintenance and/or cleaning of a production machine.

According to the present invention, there is provided a manufacturing system which comprises at least one production machine. The at least one production machine has a support frame with at least one foot for setting up the machine on a floor. The support frame comprises at least one exposed portion. The manufacturing system also comprises at least one step for removable attachment to the exposed portion of the support frame of the production machine. The step comprises at least one tread surface and at least one coupling means for removably attaching the step to the exposed portion of the support frame of the machine.

By providing a step with a tread surface, an operator may use the step for convenient and safe access to, for example, a top portion of a production machine. Coupling means for removably attaching the step to an exposed portion of a support frame of the production machine enable the step to be attached to an existing production machine, such as machines as disclosed in EP patent application 3 241 447 or US patent application 2008/0000196, without the need for modifications to said machine. Thus, it is not necessary to provide the production machine with its own step or the like, which otherwise increases the space occupied by the production machine and/or which can lead to injuries if it is placed in a height which is not in the focus of the operator.

Furthermore, the step may be removed from the production machine when not in use. The step may after removal, for example, be moved and attached to a different production machine. It is therefore possible to provide the aforementioned access to hard-to-reach portions of multiple and/or different production machines by the use of a single step according to the present invention. The ability to remove the step, when not in use, may also, for example, aid in preventing the step from posing a safety hazard to an operator dealing with the production machine.

It has to be understood that more than one step can be present in the manufacturing system. If the production machine comprises multiple exposed portions, any of the present exposed portions may be outfitted with a respective step. It may further be advantageous that the multiple exposed portions exhibit substantially equivalent geometrical configurations, so that a given step is compatible with and attachable to any one of the multiple exposed portions. In a further advantageous setting, multiple different types of production machines comprise support frames with exposed portions of substantially equivalent geometrical configurations, thereby enabling the use of a given step according to the present invention in multiple different manufacturing systems.

In other words, the present invention allows a system of one or more production machines with one or more steps wherein the number of steps may be less than the number of machines.

It may also be desirable to provide a step with more than one tread surface. Multiple tread surfaces vertically spaced apart may effectively act as ladder or as stairs, thereby providing a wider range of vertical access to the machine. Alternatively, multiple horizontally spaced apart tread surfaces may enable an operator to selectively place their feet, depending on the required task to be performed, on the production machine, or may enable multiple operators to use the step simultaneously.

In a preferred embodiment of the inventive manufacturing system, the exposed portion of the support frame of the production machine comprises at least one beam that can extend substantially horizontally. The coupling means of the step are adapted to be attached to the beam. In a further preferred embodiment of the inventive manufacturing system, the beam of the exposed portion of the support frame comprises a rectangular cross-section. The coupling means of the step comprise hooks that are dimensioned to engage the rectangular cross-section of the beam and secure the step to the machine.

Some production machines comprise horizontal beams in an exposed section of a support frame. It is therefore advantageous to adapt the coupling means of the step to be able to attach the step to said horizontal beam, thereby enabling fast and convenient attachment and detachment of the step. Coupling means for removable attachment to the horizontal beam provide a vertical constraint for the step relative to the production machine. Additional measures may be taken to provide a horizontal constraint for the step, such as elements for frictional locking on the horizontal beam or stoppers. Alternatively, it may be desirable to be able to move the step along the horizontal beam.

In further known production machines, the horizontal beam comprises a horizontal cross-section. The hooks may, by being dimensioned to engage the rectangular cross-section of the beam, provide form closure with the rectangular cross-section of the beam. Possible configurations for such dimensioning of the hooks include C-shaped profiles. Thereby, the hooks may prevent undesired rotation of the step relative to the beam, i.e. provide rotational locking relative to a longitudinal axis of the beam. Providing hooks spaced apart at a suitable distance may further ensure sufficient rotational locking of the step relative to a vertical axis of the machine.

In an alternative design, the horizontal beam of the support frame of the machine comprises a different cross-sectional geometry than a rectangular cross-section, such as, for example, a circular cross-section. The attachment means may then be, for example, realized as tensioning clamps, thereby providing both form closure and frictional locking, preventing rotation relative to a longitudinal axis of the horizontal beam. As a further alternative, the attachment means for a beam with circular cross-section may be hooks which are, for example, realized as matching semi-circular profiles.

In a further preferred embodiment of the inventive manufacturing system, the exposed portion of the support frame provides an extension that extends substantially vertically from the support frame in a direction opposite the floor. The coupling means of the step are adapted to be attached to the extension. In a further preferred embodiment of the inventive manufacturing system, the extension comprises a profiled section, and the attachment means of the step comprise a bore that is adapted to substantially match the outer dimensions of the profiled section.

Some production machines provide support frames with vertically extending extensions. Coupling means adapted to be attached to such a vertical extension provide a horizontal constraint for the step relative to the machine. Additional measures may be taken for a vertical constraint of the step, such as stoppers engaging with parts of the support frame of the machine which are located beneath the step, in a direction towards the floor. Alternatively, it may be desirable to provide horizontal movability of the step relative to the vertical extension, for example to adapt the height of the tread surface.

In some production machines, the vertically extending extension comprises a profiled section. It is therefore advantageous to provide a step with coupling means that comprise a bore, which is adapted to substantially match the outer dimensions of the profiled section. Thereby, the step can be centered relative to a vertically extending longitudinal axis of the extension. In some production machines, the vertically extending section comprises a profile, such as a splined shaft that also provides rotational locking of the step relative to the vertically extending longitudinal axis of the extension. In other production machines, it may be desirable to provide the step with freedom of rotation relative to the vertically extending longitudinal axis of the extension, for example to rotate the step out of the maneuvering space of an operator.

In a further preferred embodiment of the inventive manufacturing system, the coupling means of the step further comprise a rotation lock for preventing rotation of the step relative to the support frame of the machine. The rotation lock may be present in systems with support frames with horizontal beams and/or with vertically extending extensions, thereby preventing rotation of the step around a vertical and/or horizontal axis of the support frame. Preventing rotation of the step may be desirable, to prevent movement of the step relative to the machine when, for example, an operator is present on the tread surface of the step, performing a task on the production machine.

In a further preferred embodiment of the inventive manufacturing system, the extension of the support frame is a circular tube and the bore of the coupling means is an inner bore of a circular sleeve. The rotation lock comprises a C-shaped profile, wherein the inner dimensions of the inner surface of the C-shaped profile are adapted to substantially match the outer dimensions of the rectangular cross-section of the beam of the support frame.

Some production machines provide an exposed portion of a support frame that comprises both a vertically extending extension, which comprises a circular tube, and a horizontally extending beam with a rectangular cross-section. A step comprising a circular sleeve, wherein the inner dimensions of the circular sleeve substantially match the outer dimensions of the circular tube, may then be centered on the production machine by sliding the circular sleeve over the circular tube. The step further comprises a C-shaped profile, with its inner dimensions adapted to substantially match the outer dimensions of the horizontally extending rectangular beam. The C-shaped profile may thereby engage the horizontal beam and act as a rotation lock for preventing rotation of the step relative to the vertically extending circular tube of the support frame. The C-shaped profile may also act as a vertical constraint for the step, resting on the horizontal beam and transferring a load placed on the step into the support frame of the production machine. Alternatively, the circular sleeve may rest on a portion of the support frame, for example a floor-facing frontal face of the circular sleeve may engage with a shoulder of the circular tube of the support frame, thereby providing vertical constraint and/or a load path for a load placed on the step.

In a further preferred embodiment of the inventive manufacturing system, the tread surface of the step is dimensioned to accommodate at least one foot of an operator of the machine. The tread surface may be shaped substantially rectangular, substantially circular, substantially elliptical, shaped to substantially conform the shape of a human foot or any other geometry allowing an operator to place a foot thereon. A dimension of the shape of the tread surface, for example the length or the width of a rectangle, may be smaller than, approximately equal to or greater than a length and/or width of typical safety footwear of an operator. In particular, a major dimension of the tread surface may be at least 30 cm, at least 35 cm, at least 40 cm or at least 45 cm, preferably between 30 cm and 45 cm. The tread surface may further comprise a friction enhancing surface, for example made from riffle sheet.

In a further preferred embodiment of the inventive manufacturing system, the step further comprises at least one separation element disposed between the coupling means and the support frame of the machine. The separation elements may, for example, be disposed between the coupling means and the horizontally extending beam of the support frame, between the coupling means and the vertically extending extension of the support frame of the machine, and/or between the rotation lock and the horizontally extending beam of the machine. The separation elements may, for example, aid in adapting the step to conform different geometries of the exposed portion of the support frame of the machine. It may, for example, be advantageous to be able to outfit an inner bore of the coupling means with bushings of different inner diameters, to be able to adapt the step to different circular tubes of support frames of production machines, which comprise different outer diameters.

In an additional aspect it may further be advantageous to employ separation elements to prevent contact between certain surfaces of the step with certain surfaces of the support frame. If, for example, the step and the support frame of the machine are made from stainless steel, as is preferred in the food industry, but different alloys of stainless steel are used for the step and the support frame respectively, prolonged contact could lead to galling, corrosion and/or other undesired surface/surface interactions. It may, for example, also be advantageous to employ separation elements to prevent sliding contact between bare steel surfaces of the step and the support frame. Such sliding may occur during attachment of the step to the support frame and could facilitate fretting.

It may, for any desired application of separation elements, therefore be desirable for the separation elements to be removably attached, so that they can be changed for different separation elements. Suitable materials for separation elements can be chosen according to their elasticity, and may include metal, preferably softer metals such as copper, aluminum, tin; alloys such as bronze or brass; or polymers, such as elastomers, thermoplastic polymers, thermosetting polymers and/or copolymers or blends thereof. Suitable materials can also be chosen for their electrochemical properties, such as the placement of metals in the galvanic series, in order to achieve desirable corrosion properties of the material combination between the separation elements and the material of the support frame and/or the step.

In a further preferred embodiment of the inventive manufacturing system, the step further comprises an adjustment mechanism for moving the tread surface relative to the coupling means. The movement can include shifting in a plane parallel to the floor, raising and lowering the tread surface along a vertical axis of the production machine, and/or rotating the tread surface around a horizontal or vertical axis. Moving the tread surface relative to the coupling means may be advantageous when different sections of the production machine shall be accessed from an operator on the step. Additionally, it may be desirable to move the tread surface out of a maneuvering space of the operator when the step is not in use, whenever it is not desired or not convenient to fully remove the step from the production machine.

In a further preferred embodiment of the inventive manufacturing system, the adjustment mechanism of the step comprises a guiding rod arranged parallel to the tread surface, and at least one hub movably coupled to the guiding rod. The guiding rod may be fixed relative to the tread surface and the at least one hub may be fixed relative to the coupling means. Alternatively, the guiding rod may be fixed relative to the coupling means and the at least one hub may be fixed relative to the tread surface. More than one hub may be present to aid in guiding of the movement of the guiding rod. An adjustment mechanism according to this preferred embodiment therefore allows the tread surface to be shifted relative to the coupling means in a plane parallel to the floor.

In a further preferred embodiment of the inventive manufacturing system, the adjustment mechanism further comprises fixation means to releasably lock the tread surface relative to the coupling means. Releasably locking the tread surface may be desired to prevent undesired movement relative to the coupling means. Possible embodiments of such a releasable fixation means include spring biased or unbiased bolt locks.

In a further preferred embodiment of the inventive manufacturing system, the fixation means are self-locking, so that they lock the tread surface relative to the coupling means when a sufficient load is applied to the tread surface. Self-locking fixation means are particularly advantageous, because an operator is freed from performing a locking operation after adjusting the positon of the tread surface. Such self-locking fixation means can provide additional comfort to the operator or pose a safety mechanism, so that undesired movement of the tread surface is inhibited whenever an operator steps on the tread surface.

In a further preferred embodiment of the inventive manufacturing system, the self-locking fixation means comprise a sliding rod, arranged parallel to the tread surface, and a sliding pad, movable relative to the sliding rod. The sliding rod and the sliding pad form a contact surface therebetween, along which the sliding rod and the sliding pad are slideable relative to each other. The contact surface forms a non-perpendicular angle with the tread surface. By forming a contact surface, the fixation mechanism can provide further support and guidance for the movable tread surface. Separation elements may be disposed between the sliding rod and the sliding pad on the contact surface, similar to the separation elements previously described, which may be located between the coupling means and the support frame.

The self-locking property of the fixation means results from the arrangement of the contact surface. By forming a non-perpendicular angle with the tread surface, it is ensured that any load placed on the tread surface increases a resultant pressure on the contact surface. The contact surface is configured such that, when no load is placed on the tread surface, the pressure exhibited on the contact surface by the weight of the tread surface results in a frictional force between sliding pad and sliding rod, which is sufficiently low to enable a sliding movement between sliding pad and sliding rod. The contact surface is further configured such that, when an operator steps on the tread surface, the pressure exhibited on the contact surface results in a frictional force between sliding pad and sliding rod, which is sufficiently high to inhibit a sliding movement between sliding pad and sliding rod.

In a particular embodiment, the sliding rod may be a rectangular pipe, which is fixed relative to the tread surface, such that a lateral surface of the rectangular pipe forms a non-perpendicular angle with the tread surface. The sliding pad may further be formed from a flat bar and be fixed relative to the coupling means, which is arranged parallel to and in contact with one of the lateral surfaces of the rectangular pipe, thereby forming the contact surface. The contact between the flat bar and the rectangular pipe may be established by separation elements. The material of the separation elements may be chosen in order to provide desirable sliding and self-locking properties and be a material suitable for use in friction bearings, for example a metal or a metal alloy, such as bronze, aluminum, or brass; or a polymer, such as polytetrafluoroethylene (PTFE) or polyoxymethylene (POM), or other elastomers, thermoplastic polymers, thermosetting polymers and/or copolymers or blends thereof. The angle which the contact area forms with the tread surface and the size and geometry of the contact area may be optimized to provide desired sliding and self-locking properties. The angle which the contact area forms with the tread surface, measured at an intersection between an extension of the contact area with the tread surface, may be between 15 degrees and 75 degrees, preferably between 30 degrees and 60 degrees and preferably 45 degrees.

According to the present invention there is also provided a step for removable attachment to an exposed portion of a support frame of a production machine, wherein the step comprises any of the previously described features or combinations thereof.

Further advantages and a preferred embodiment of the present invention will be described in the following together with the drawings listed below.

Expressions such as "up", "down", "above", "below", "on top", "beneath" or analogous expressions for a relative spatial position along a vertical axis are defined relative to a floor on which the feet of the production machine are placed, wherein "down", "below", "beneath" or analogous expressions relate to a relative position closer to the floor, and "up", "above", "on top" or analogous expressions relate to a relative position further away from the floor.

Expressions such as "in front", "behind", "left" and "right" or analogous expressions for a spatial position relative to a viewer are defined relative to the viewer's perspective view on the drawings, wherein "in front" or analogous expressions relate to a relative position closer to the viewer, and "behind" or analogous expressions relate to a relative position further away from the viewer.

In the drawings:
- Fig. 1:: is a perspective view of a manufacturing system according to the present invention, with a tread surface of a removably attached step shifted to a first position;
- Fig. 2:: is a perspective view of the manufacturing system of Fig. 1, with a tread surface of the removably attached step shifted to a second position;
- Fig. 3:: is a perspective and detailed view from slightly above of a step for removable attachment to the production machine of the manufacturing system of Figs. 1 and 2;
- Fig. 4:: is a perspective view from slightly below of the step of Fig. 3, with the tread surface shifted to a first position; and
- Fig. 5:: is a perspective view from slightly below of the step of Figs. 3 and 4, with the tread surface shifted to a second position.

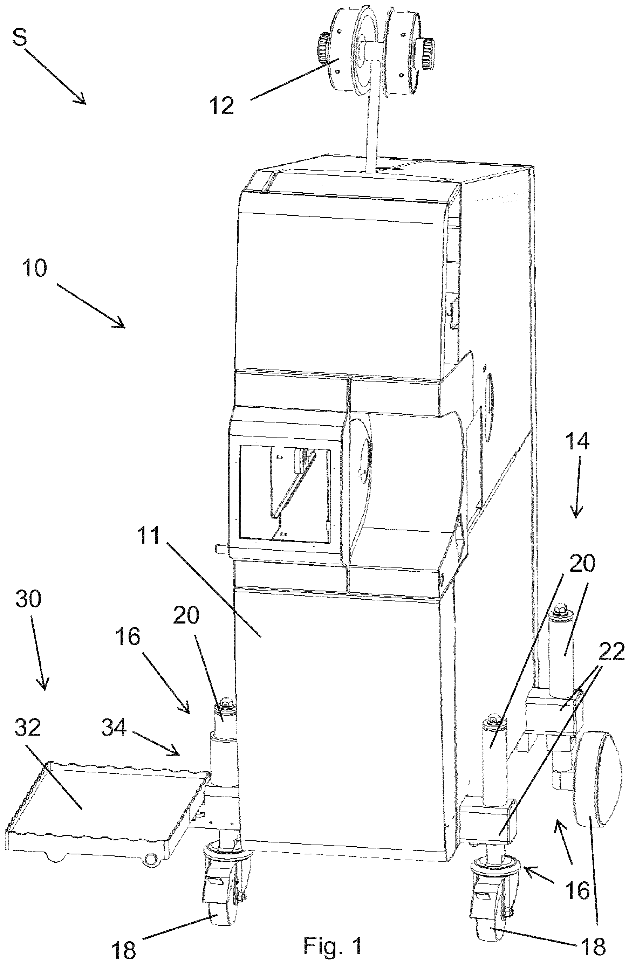

A manufacturing system S as shown in Fig. 1 comprises a production machine 10, having a main body 11, a clip reel 12 which extends from and is mounted on top of main body 11, and a support frame 14, located toward a bottom of main body 11. Main body 11 in the depicted configuration exhibits a generally box-like shape, with a majority of parts of machine 10 being housed by main body 11. Support frame 14 of the depicted configuration comprises four exposed portions 16, which extend from main body 11 and are accessible without further manipulation of machine 10 or its main body 11. Due to the perspective view of Fig. 1, one exposed portion 16 is covered by and located behind main body 11, therefore only three exposed portions 16 are visible.

Exposed portions 16 each comprise a foot 18 for setting up machine 10 on a floor. Exposed portions 16 further each comprise an extension 20, which extends substantially vertically from support frame 14. In the depicted configuration, extensions 20 are circular tubes, which house an axle of feet 18, thereby allowing wheels of feet 18 to rotate around a vertical axis. Exposed portions 16 further each comprise a horizontally extending beam 22 of rectangular cross-section, to which feet 18 are attached, and from which extensions 20 extend.

Even though in the depicted configuration feet 18 comprise wheels which provide manufacturing system S with the advantage of being easily moved, it has to be understood that other feet may be used, such as pedestals. It is furthermore obvious that production machine 10 is not limited to a configuration with four exposed portions 16 and four feet 18. The number of exposed portions 16 may be smaller than or greater than four and may not need to be equal to the number of feet 18, an exposed portion 16 may for example comprise more than one foot 18. It is further understood that the number of feet 18 may be smaller than four, such as two or three, or higher than four, such as five or six. Any number of feet 18 that ensures a secure setup of machine 10 on a floor is within the scope of the present invention.

As can further be inferred from Fig. 1, manufacturing system S comprises a step 30, having a tread surface 32 and coupling means 34. In the depicted configuration, step 30 is attached to front left exposed portion 16 of machine 10, however due to the identical dimensions of present exposed portions 16, step 30 may be attached to any one of the exposed portions 16 of machine 10. Coupling means 34 are configured to securely and removably attach step 30 to any one of the exposed portions 16 of depicted machine 10, thereby maximizing a maneuvering range of an operator. In the depicted configuration, attachment and detachment of step 30 may be performed without tools, by sliding coupling means 34 over extension 20 and engaging with beam 22.

Toolless attachment of step 30 to an exposed portion 16 of an existing machine 10 provides an efficient way to adapt an existing machine 10 to allow for more secure and convenient operation. It is possible to provide an operator with a tread surface 32 for a secure foothold to, for example, easily reach sections on top of machine 10, without the need to perform irreversible structural modifications to machine 10, or other hard-to-reach portions of the machine. When step 30 is no longer needed, it may be removed, returning machine 10 to its initial configuration. In a production environment with multiple machines 10, a single step 30 may be used to be attached to any desired one of multiple machines 10 as needed. Thereby an efficient way or system, respectively, is provided to allow for a more efficient operation of an entire production line, without the need to perform structural modifications to every single present machine 10.

It further has to be understood that more than one step 30 may be present in manufacturing system S, with each step 30 being attached to a corresponding exposed portion 16 of machine 10.

While machine 10 depicted in Fig. 1 is a clipping machine as disclosed, for example, in EP patent application 3 241 447, it has to be understood that providing step 30 to other production machines with support frames with exposed portions, like for example, packaging machines as disclosed in US patent application 2008/0000196 will provide similar benefits. Production machine 10 of manufacturing system S of the present invention is therefore not limited to clipping machines or machines for producing foodstuff.

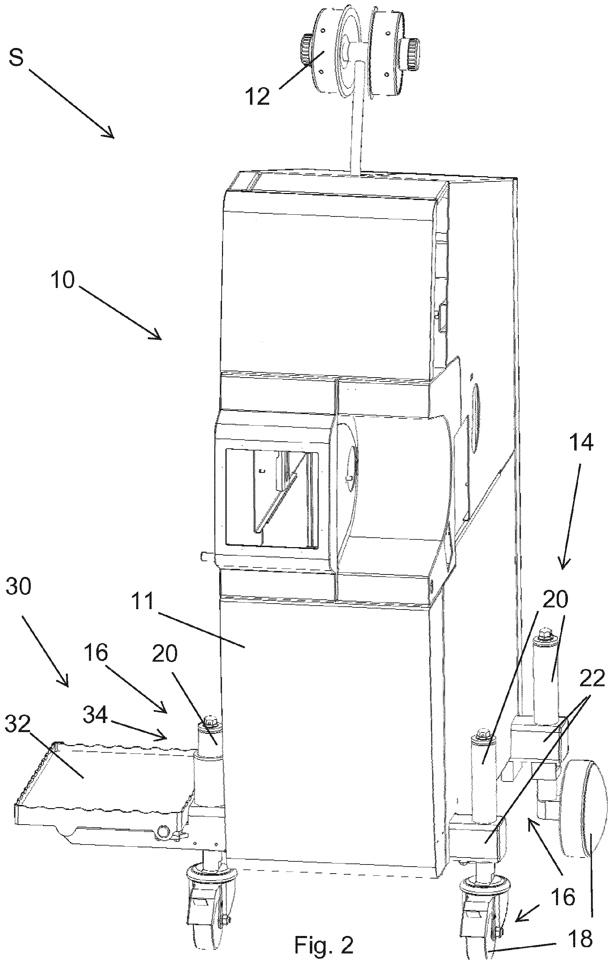

Fig. 2 depicts the machine of Fig. 1, wherein tread surface 32 of step 30 is shifted relative to coupling means 34 in a plane parallel to the floor, into a second position. The second position is located in a direction further towards the back of machine 10, compared to the first position of tread surface 32 which is depicted in Fig. 1. Shifting tread surface 32 may be beneficial to provide an operator with a greater reach while standing on tread surface 32, without the need to attach step 30 to a different exposed portion 16. In the depicted configuration, the second position of tread surface 32 is a position, wherein tread surface 32 does not extend beyond a frontal plane of machine 10 defined by a frontal face of main body 11. It becomes therefore apparent that shifting tread surface 32 to a second position may also be beneficial when step 30 is not in use, but it is not desired to remove step 30 entirely from machine 10. Tread surface 32 in the second position increases the safety of an operator working in front of machine 10, by posing a reduced tripping hazard as compared to the first position of Fig.1, wherein tread surface 32 extends beyond the frontal plane of machine 11.

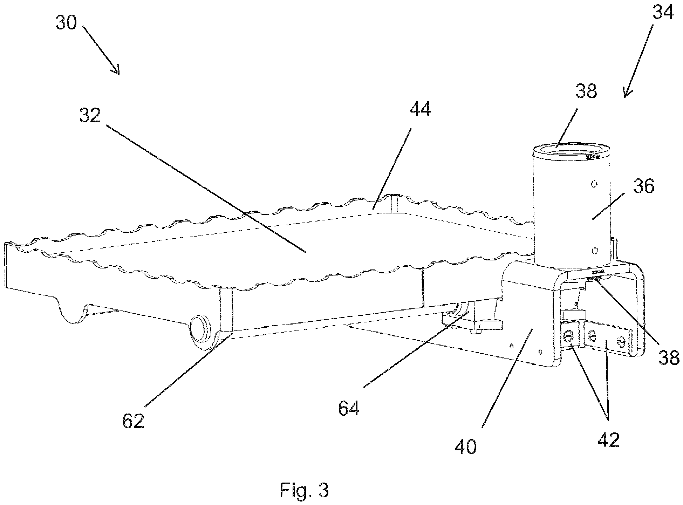

Fig. 3 is a detailed view of step 30 of manufacturing system S. Coupling means 34 comprise a circular sleeve 36, having separation elements 38. The diameter of a bore of circular sleeve 36 conforms the outer diameter of extension 20 of machine 10, allowing it to slide sleeve 36 over extension 20, thereby attaching and centering step 30 on extension 20.

Separation elements 38 may be disposed on both upper and lower frontal surfaces of sleeve 36 and/or on an inner surface of the bore of sleeve 36. When separation elements 38 are present on an inner surface of sleeve 36, they form bushings. It is clear that when separation elements 36 form bushings, their inner diameter then conforms the outer diameter of extension 20 of machine 10. Separation elements 38 may, for example, serve to prevent contact between sleeve 36 and extension 20 and/or beam 22 of support frame 14. If, for example, step 36 and support frame 14 are made from the same material, such as stainless steel, as is preferred in the food industry, prolonged contact could lead to galling, corrosion and/or other undesired surface/surface interactions.

Separation elements 38, which for example form bushings in sleeve 36, may further be beneficial to adapt step 30 to conform different geometries of exposed portions 16. It may, for example, be advantageous to be able to outfit the inner bore of sleeve 36 with bushings of different inner diameters, to be able to adapt step 36 to different circular tubes of extensions 20 of different machines 10, which comprise different outer diameters.

In the embodiment of Fig. 3, coupling means 34 further comprise a rotation lock 40, adjacent to and below sleeve 36. Rotation lock 40 comprises a C-shaped profile with inner dimensions adapted to substantially match the outer dimension of the cross-section of beam 22 of support frame 14. When step 30 is attached to exposed portion 16 by means of sliding sleeve 36 over extension 20, thereby centering step 30 on extension 20, the C-shaped profile of rotation lock 40 further engages beam 20, and prevents step 30 from rotation around the vertical axis of extension 20. With separation element 38 disposed on the lower frontal surface of sleeve 36 contacting beam 22, or in the case of step 30 without a separation element 38 at that location, lower frontal surface of sleeve 36 directly contacting beam 22, it is ensured that step 30 is sufficiently constrained on support frame 14. The only remaining degree of freedom ensures that step 30 may be pulled up along the vertical axis of extension 20, thereby removing step 30 from machine 10.

Rotation lock 40 may also be outfitted with separation elements 42 on its inner surface, which may perform substantially analogous tasks as separation elements 38 of sleeve 36. It may, for any desired application of separation elements 36 and 42, therefore be desirable to be removably attached, so that they can be changed for different separation elements. In the depicted embodiment, separation elements 42 are formed as flat plates screwed to the inner surface of rotation lock 40.

Suitable materials for separation elements 38 and 42 may include metal, preferably softer metals such as copper, aluminum, tin; alloys such as bronze or brass; or polymers, such as elastomers, thermoplastic polymers, thermosetting polymers and/or copolymers or blends thereof, in particular polytetrafluoroethylene (PTFE) or polyoxymethylene (POM).

Fig. 3 shows tread surface 32 outfitted with a corrugated rim 44, which may prevent an operator from slipping off tread surface 32. As a further measure to increase an operator's grip on tread surface 32, it may comprise a friction enhancing surface, for example made from riffle sheet. Tread surface 32 is dimensioned to accommodate at least one foot of an operator of the machine. The embodiment of Fig. 3 shows tread surface 32 with a substantially rectangular shape. The length or width of the rectangle, wherein length refers to the greater one of the two dimensions, may be smaller than, approximately equal to or greater than a length and/or width of typical safety footwear of an operator.

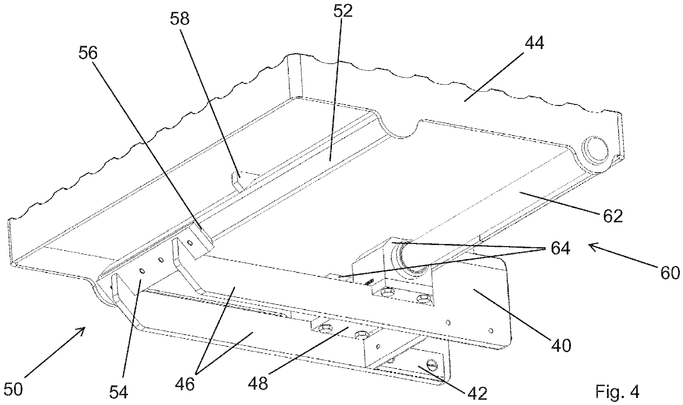

Fig. 4 shows step 30 of Fig. 3 from slightly below. Two support beams 46 extend from rotation lock 40 parallel to tread surface 32 as extensions of portions of the flanges of the C-shaped profile. A support plate 48 may connect support beams 46 in a plane parallel to tread surface 32.

Step 30 further comprises fixation means 50, having a sliding rod 52 arranged parallel to tread surface 32 and perpendicular to support beams 46, a sliding pad 54 which is movable relative to sliding rod 52, and a contact surface 56 formed between sliding rod 52 and sliding pad 54. Sliding pad 54 is attached to and connects support beams 46, at an end of support beams 46 which is distant to coupling means 34. Sliding rod 52, in the present embodiment, is a rectangular beam with its frontal ends attached to a section of corrugated rim 44. A central support 58 may connect a central portion of sliding rod 52 with tread surface 32. Sliding pad 54 and sliding rod 52 are arranged so that they contact along contact surface 56, wherein contact surface 56 forms a non-perpendicular angle with tread surface 32. In the present embodiment, sliding pad 54 contacts sliding rod 52 along a lateral surface of sliding rod 52. Sliding rod 52 is rotated around its longitudinal axis, so that the lateral surface of its rectangular cross-section, which provides a contact area to form contact surface 56 with sliding pad 54, naturally forms the same non-perpendicular angle with tread surface 32 as contact surface 56. Furthermore, sliding pad 54 is arranged parallel to the lateral surface of sliding rod 52, which provides the contact area to form contact surface 56. Therefore, sliding pad 54 itself forms the same non-perpendicular angle with tread surface 32 as contact surface 56.

As further can be inferred from Fig. 4, step 30 further comprises an adjustment mechanism 60 for moving tread surface 32 relative to coupling means 34. In the present embodiment, adjustment mechanism 60 comprises a guiding rod 62, arranged parallel to tread surface 32, and two hubs 64, movably coupled to guiding rod 62. Guiding rod 62 is a circular tube which extends perpendicular to support beams 46, and is attached at its frontal ends to corrugated rim 44, guiding rod 62 further extends through bores in hubs 64, which are attached to support plate 48. Hubs 64 of the present embodiment may include sliding bearings which provide desirable sliding properties between guiding rod 62 and hubs 64.

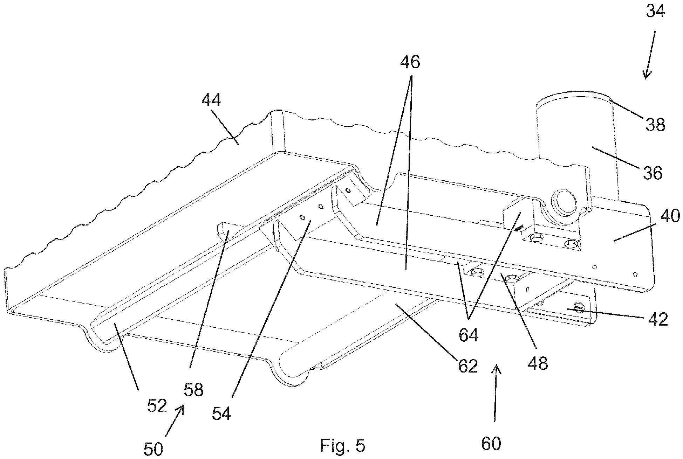

Adjustment mechanism 60 therefore enables tread surface 32 to be shifted relative to coupling means 34 along a longitudinal axis of guiding rod 62. A first end stop of the shifting movement is depicted with the first position of tread surface 32 as shown in Figs. 1, 3 and 4. A second end stop of the shifting movement on the opposite end of the first end stop is depicted with the second position of tread surface 32 as shown in Figs. 2 and 5. Tread surface 32 may be placed in any position between the first and second end stop.

When tread surface 32 is shifted along guiding rod 62, the lateral surface of sliding rod 52, which provides a contact area to form contact surface 56, slides along sliding pad 54. The given configuration of sliding rod 52 and sliding pad 54 constitutes a self-locking fixation mechanism. By forming a non-perpendicular angle with tread surface 32, in the present embodiment particularly a 45° angle, it is ensured that any load placed on tread surface 32 increases a resultant pressure on contact surface 56. Contact surface 56 is configured such that, when no load is placed on tread surface 32, the pressure exhibited on contact surface 56 by the weight of tread surface 32 results in a frictional force between sliding pad 54 and sliding rod 52, which is sufficiently low to enable a sliding movement between sliding pad 54 and sliding rod 52. Contact surface 56 is further configured such that, when an operator steps on tread surface 32, the pressure exhibited on contact surface 56 results in a frictional force between sliding pad 54 and sliding rod 52, which is sufficiently high to inhibit a sliding movement between sliding pad 54 and sliding rod 52.

Sliding pad 54 may comprise separation elements similar to separation elements 38 and 42, which are made from a material chosen according to desirable sliding and self-locking properties. Suitable materials are particularly materials which are commonly used in friction bearings, for example a metal or a metal alloy, such as bronze, aluminum, or brass; or a polymer, such as polytetrafluoroethylene (PTFE) or polyoxymethylene (POM), or other elastomers, thermoplastic polymers, thermosetting polymers and/or copolymers or blends thereof.

Fig. 5 is a view on step 30 of Fig. 4, from the same perspective, wherein tread surface 32 has been shifted to a second end stop.

## Claims

1. A manufacturing system (S) comprising:
at least one production machine (10) having a support frame (14) with at least one foot (18) for setting up the machine (10) on a floor, wherein a support frame (14) comprises at least one exposed portion (16); and
at least one step (30) for removable attachment to the exposed portion (16) of the support frame (14) of the production machine (10), the step (30) comprising
at least one tread surface (32); and
at least one coupling means (34) for removably attaching the step (30) to the exposed portion (16) of the support frame (14) of the machine (10).

2. The manufacturing system (S) of claim 1, wherein the exposed portion (16) of the support frame (14) of the production machine (10) further comprises at least one beam (22) that extends substantially horizontally; and
wherein the coupling means (34) of the step (30) are adapted to be attached to the beam (22).

3. The manufacturing system (S) of claim 2, wherein the beam (22) comprises a section of rectangular cross-section, and
wherein the coupling means (34) of the step (30) comprise hooks that are dimensioned to engage the rectangular cross-section of the beam (4) and secure the step (30) to the machine (10).

4. The manufacturing system (S) of any of claims 1 or 2, wherein the exposed portion (16) of the support frame (14) provides an extension (20) that extends substantially vertically from the support frame (14) in a direction opposite the floor, and
wherein the coupling means (34) of the step (30) are adapted to be attached to the extension (20).

5. The manufacturing system (S) of claim 4, wherein the extension (20) of the support frame (14) comprises a profiled section, and
wherein the coupling means (34) of the step (30) comprise a bore, adapted to substantially match the outer dimensions of the profiled section of the extension (20).

6. Manufacturing system (S) of any of claims 2, 4 and 5, wherein the coupling means (34) further comprise a rotation lock (40) for preventing rotation of the step (30) relative to the support frame (14) of the machine (10).

7. Manufacturing system (S) of claim 6, wherein the extension (20) of the support frame (14) is a circular tube; and
wherein the bore of the coupling means (34) is an inner bore of a circular sleeve (36); and
wherein the rotation lock (40) comprises a C-shaped profile, wherein the dimensions of an inner surface of the C-shaped profile are adapted to substantially match the outer dimensions of the rectangular cross-section of the beam (22) of the support frame (14).

8. Manufacturing system (S) of any of claims 1 to 7, wherein the at least one tread surface (32) is dimensioned to accommodate at least one foot of an operator of the machine (10).

9. Manufacturing system (S) of any of claims 1 to 8, wherein the step (30) further comprises at least one separation element (38, 42) disposed between the coupling means (34) and the support frame (14) of the machine (10).

10. Manufacturing system (S) of any of claims 1 to 9, wherein the step (30) further comprises an adjustment mechanism (60) for moving the tread surface (32) relative to the coupling means (34).

11. Manufacturing system (S) of claim 10, wherein the adjustment mechanism (60) of the step (30) comprises:
a guiding rod (62) arranged parallel to the tread surface (32);
at least one hub (64) movably coupled to the guiding rod (62).

12. Manufacturing system (S) of any of claims 10 or 11, wherein the adjustment mechanism (60) further comprises fixation means (50) to releasably lock the tread surface (32) relative to the coupling means (34).

13. Manufacturing system (S) of claim 12, wherein the fixation means (50) are self-locking, so that they lock the tread surface (32) relative to the coupling means (34) when a sufficient load is applied to the tread surface (32).

14. Manufacturing system (S) of claim 13, wherein the self-locking fixation means (50) comprise:
a sliding rod (52) arranged parallel to the tread surface (32); and
a sliding pad (54) movable relative to the sliding rod (52);
wherein the sliding rod (52) and the sliding pad (54) form a contact surface (56) therebetween, along which the sliding rod (52) and the sliding pad (54) are slideable relative to each other, the contact surface (56) forming a non-perpendicular angle with the tread surface (32).

15. A step (30) as defined in any of claims 1 to 14, for removable attachment to an exposed portion (16) of a support frame (14) of a production machine (10).
